# EUROPÄISCHE PATENTANMELDUNG

(11) **EP 2 762 261 A1**
(43) Veröffentlichungstag der Anmeldung: **06.08.2014**
(21) Anmeldenummer: 13153730.0
(22) Anmeldetag: 01.02.2013
(51) Int. Cl.: B23K 26/06, B23K 26/38, G02B 13/00

(54) **Schneidoptik für eine Laserschneidanlage, mit Korrektur oder gezielten Beeinflussung der chromatischen Aberration ; Laserschneidanlage mit solcher Optik**

(71) Anmelder: Bystronic Laser AG, 3362 Niederönz (CH)
(72) Erfinder: Deichsel, Eckard, 4913 Bannwil (CH); Rataj, Thomas, 3363 Oberönz (CH)
(74) Vertreter: Patentbüro Paul Rosenich AG

(57) **Zusammenfassung**

Eine Schneidoptik für eine Laserschneidanlage besteht aus mindestens einem optischen Element zur Strahlformung und Fokussierung des Laserstrahls auf ein Werkstück. Zumindest ein optisches Element ist zur Korrektur oder gezielten Beeinflussung der chromatischen Aberration vorgesehen.

Eine Laserschneidanlage ist vorteilhafterweise mit einer derartigen Schneidoptik ausgestattet und kann dadurch mit zumindest einer Laserquelle für Laserlicht mit einer spektralen Breite grösser als 10nm FWHM (= full width at half maximum) betrieben werden, die kollimiert, fokussiert oder divergent im Freistrahl vor der Schneidoptik zur Verfügung steht.

## Beschreibung

Die Erfindung betrifft eine Schneidoptik für eine Laserschneidanlage, bestehend aus mindestens einem optischen Element zur Strahlformung und Fokussierung des Laserstrahls auf ein Werkstück, nach dem Oberbegriff des Anspruchs 1, 5 oder 6 und eine Laserschneidanlage mit einer Schneidoptik und zumindest einer Laserquelle für Laserlicht mit einer spektralen Breite grösser als 10nm FWHM, die kollimiert, fokussiert oder divergent im Freistrahl vor der Schneidoptik zur Verfügung steht, wobei vorzugsweise die Laserstrahlung mittels Transportfaser zur Schneidoptik transportiert wird und unmittelbar vor der Schneidoptik aus dem Faserende austritt, nach dem Oberbegriff des Anspruchs 9.

Die chromatische Aberration ist eine bekannte Fehlerquelle bei Abbildungen mittels optischer Linsen, bei der Licht mit unterschiedlicher Wellenlänge unterschiedlich stark gebrochen wird. Insbesondere beim Laserschneiden führt dies zu einem in z-Richtung verzerrten Fokuspunkt des fokussierten Laserstrahls.

Beim konventionellen Laserschneiden mit CO2-Lasern ist die spektrale Breite des Laserstrahls typischerweise <10nm FWHM (= full width at half maximum) und der Einfluss der chromatischen Aberration beim Fokussieren in der Schneidoptik ist gering bzw. hat keine negativen Auswirkungen auf das Schneidergebnis.

Bei Laserquellen mit breiteren spektralen Anteilen (>10nm FWHM) kann sich der Einfluss der chromatischen Aberration auf das Schneidergebnis auswirken.

Aufgabe der vorliegenden Erfindung ist es somit, die Schneidoptik bzw. die gesamte Laserschneidanlage für ein verbessertes Schneidergebnis auch für Laserlichtquellen mit spektral breitbandigen Lichtquellen zu optimieren.

Die Aufgabe wird durch die Merkmale der unabhängigen Ansprüche 1, 5, 6 und 9 gelöst. Vorteilhafte Weiterbildungen sind in den Figuren und in den abhängigen Patentansprüchen dargelegt.

Gemäss der Erfindung ist eine Schneidoptik zur Lösung der Aufgabe dadurch gekennzeichnet, dass zumindest ein optisches Element zur Korrektur oder gezielten Beeinflussung der chromatischen Aberration vorgesehen ist.

Vorzugsweise ist vorgesehen, dass das optische Element zur Korrektur oder gezielten Beeinflussung der chromatischen Aberration eine achromatische Linse bzw. ein Achromat ist.

Alternativ dazu kann das optische Element zur Korrektur oder gezielten Beeinflussung der chromatischen Aberration eine Kombination mehrerer Linsen unterschiedlicher Brechungsindizes sein.

Gemäss einer vorzugsweisen Ausführungsform weist das optische Element zur Korrektur oder gezielten Beeinflussung der chromatischen Aberration eine auf die spektrale Breite des Laserstrahls angepasste Antireflexbeschichtung auf.

Gemäss einer weiteren Variante der Erfindung ist eine Schneidoptik **dadurch gekennzeichnet, dass** mehrere optische Elemente zur Strahlformung und Fokussierung des Laserstrahls auf ein Werkstück vorgesehen und abwechselnd in den Strahlengang des Laserstrahls bringbar sind, wobei die Brechungseigenschaften der optischen Elemente derart aufeinander abgestimmt sind, dass der Fokuspunkt für verschiedene, vorgegebene Wellenlängen bei allen optischen Elementen übereinstimmt.

Eine weitere erfindungsgemässe Lösung ist **dadurch gekennzeichnet, dass** mehrere optische Elemente zur Strahlformung und Fokussierung des Laserstrahls auf ein Werkstück vorgesehen und abwechselnd in den Strahlengang des Laserstrahls bringbar sind, wobei die Brechungseigenschaften der optischen Elemente derart aufeinander abgestimmt sind, dass der Fokuspunkt für verschiedene, vorgegebene Wellenlängen für unterschiedliche optische Elemente unterschiedlich geformt ist, insbesondere in Richtung der Strahlachse unterschiedliche Ausdehnung aufweist.

Die Schneidoptiken nach den beiden vorhergehenden Absätzen ist bevorzugt derart ausgebildet, dass die optischen Elemente mit zumindest einer Düse zur Zuführung eines Prozessgases gekoppelt und als Einheit abwechselnd in den Strahlgang des Laserstrahls bringbar sind.

Gemäss einer vorteilhaften Ausführungsform sind die Gesamtheit der optischen Elemente oder der Kombinationen mit zumindest einer Düse in Art eines Revolverkopfes kreisförmig angeordnet.

Zur Lösung der eingangs gestellten Aufgabe ist eine Laserschneidanlage mit einer Schneidoptik gemäss einem der vorhergehenden Absätze ausgerüstet.

Bevorzugt wird dabei der Schneidoptik gleichzeitig Laserlicht aus mehreren Laserquellen mit unterschiedlichen Wellenlängen zugeführt.

Weitere Vorteile, Merkmale und Einzelheiten der Erfindung ergeben sich aus der nachfolgenden Beschreibung. Dabei können die in den Ansprüchen und in der Beschreibung erwähnten Merkmale jeweils einzeln für sich oder in beliebiger Kombination erfindungswesentlich sein.

Die Schneidoptiken gemäss der vorliegenden Erfindung sind besonders vorteilhaft bei Laserschneidanlagen mit einer oder mehreren Laserquelle, bei der oder welchen das Laserlicht eine spektrale Breite von grösser als 10nm (FWHM (= full width at half maximum)) aufweist. Es kann dabei kollimiert, fokussiert oder auch divergent im Freistrahl vor der Schneidoptik zur Verfügung stehen. Typischerweise kann die Laserstrahlung mittels Transportfaser zur Schneidoptik transportiert werden und tritt unmittelbar vor der Schneidoptik aus dem Faserende aus. Sie kann aber auch im Freistrahl transportiert werden oder unmittelbar vor der Schneidoptik erzeugt werden. Ein Beispiel für derartige Laserlichtquellen sind Systeme mit Diodenlasern unterschiedlicher Wellenlänge, die in eine gemeinsame Lichtleitfaser eingekoppelt und gemeinsam über weitere optische Bauteile zur Strahlformung und -leitung dem Schneidkopf einer Laserschneidanlage zugeführt werden.

Die Schneidoptik besteht aus mindestens einem optischen Element und dient der Strahlformung und Fokussierung des Laserstrahls auf das Werkstück. Sie zeichnet sich dadurch aus, dass zumindest ein optisches Element zur Korrektur oder gezielten Beeinflussung der chromatischen Aberration vorgesehen ist. Damit kann selbst für spektral breitbandige Laserlichtquellen der Fokuspunkt in einer Ebene eingestellt werden. Bei Einsatz von optischen Elementen, welche die chromatische Aberration nicht komplett korrigieren ist eine gezielte Beeinflussung möglich, wobei der Fokuspunkt in Richtung der Strahlachse in einer genau vordefinierten Weise verzerrt ist.

Ein optisches Element zur Verwendung im Rahmen der Erfindung kann eine achromatische Linse bzw. ein Achromat sein, aber auch eine Kombination mehrerer Linsen unterschiedlicher Brechungsindizes.

Gemäss einer vorzugsweisen Ausführungsform weist das optische Element zur Korrektur oder gezielten Beeinflussung der chromatischen Aberration eine auf die spektrale Breite des Laserstrahls angepasste Antireflexbeschichtung auf, um Transmissionsverluste zu minimieren.

Überdies sollen auch andere Wellenlängen (z.B. Prozessbeobachtung, Pointing-Laser) transmittiert werden.

Gemäss einer weiteren Variante der Erfindung ist eine Schneidoptik **dadurch gekennzeichnet, dass** mehrere optische Elemente zur Strahlformung und Fokussierung des Laserstrahls auf ein Werkstück vorgesehen und abwechselnd in den Strahlengang des Laserstrahls bringbar sind, wobei die Brechungseigenschaften der optischen Elemente derart aufeinander abgestimmt sind, dass der Fokuspunkt für verschiedene, vorgegebene Wellenlängen bei allen optischen Elementen übereinstimmt.

Eine weitere erfindungsgemässe Lösung ist **dadurch gekennzeichnet, dass** mehrere optische Elemente zur Strahlformung und Fokussierung des Laserstrahls auf ein Werkstück vorgesehen und abwechselnd in den Strahlengang des Laserstrahls bringbar sind, wobei die Brechungseigenschaften der optischen Element derart aufeinander abgestimmt sind, dass der Fokuspunkt für verschiedene, vorgegebene Wellenlängen für unterschiedliche optische Elemente unterschiedlich geformt ist, insbesondere in Richtung der Strahlachse unterschiedliche Ausdehnung aufweist.

Die Schneidoptiken nach den beiden vorhergehenden Absätzen ist bevorzugt derart ausgebildet, dass die optischen Elemente mit zumindest einer Düse zur Zuführung eines Prozessgases gekoppelt und als Einheit abwechselnd in den Strahlgang des Laserstrahls bringbar sind.

Gemäss einer vorteilhaften Ausführungsform sind die Gesamtheit der optischen Elemente oder der Kombinationen mit zumindest einer Düse in Art eines Revolverkopfes kreisförmig angeordnet.

Zur Lösung der eingangs gestellten Aufgabe ist eine Laserschneidanlage mit einer Schneidoptik gemäss einem der vorhergehenden Absätze ausgerüstet.

Bevorzugt wird dabei der Schneidoptik gleichzeitig Laserlicht aus mehreren Laserquellen mit unterschiedlichen Wellenlängen zugeführt.

## Patentansprüche

1. Schneidoptik für eine Laserschneidanlage, bestehend aus mindestens einem optischen Element zur Strahlformung und Fokussierung des Laserstrahls auf ein Werkstück, **dadurch gekennzeichnet, dass** zumindest ein optisches Element zur Korrektur oder gezielten Beeinflussung der chromatischen Aberration vorgesehen ist.

2. Schneidoptik nach Anspruch 1, **dadurch gekennzeichnet, dass** das optische Element zur Korrektur oder gezielten Beeinflussung der chromatischen Aberration eine achromatische Linse bzw. ein Achromat ist.

3. Schneidoptik nach Anspruch 1, **dadurch gekennzeichnet, dass** das optische Element zur Korrektur oder gezielten Beeinflussung der chromatischen Aberration eine Kombination mehrerer Linsen unterschiedlicher Brechungsindizes ist.

4. Schneidoptik nach einem der Ansprüche 1 bis 3, **dadurch gekennzeichnet, dass** das optische Element zur Korrektur oder gezielten Beeinflussung der chromatischen Aberration eine auf die spektrale Breite des Laserstrahls angepasste Antireflexbeschichtung aufweist.

5. Schneidoptik für eine Laserschneidanlage, besteht aus mindestens einem optischen Element zur Strahlformung und Fokussierung des Laserstrahls auf ein Werkstück, **dadurch gekennzeichnet, dass** mehrere optische Elemente zur Strahlformung und Fokussierung des Laserstrahls auf ein Werkstück vorgesehen und abwechselnd in den Strahlengang des Laserstrahls bringbar sind, wobei die Brechungseigenschaften der optischen Elemente derart aufeinander abgestimmt sind, dass der Fokuspunkt für verschiedene, vorgegebene Wellenlängen bei allen optischen Elementen übereinstimmt.

6. Schneidoptik für eine Laserschneidanlage, besteht aus mindestens einem optischen Element zur Strahlformung und Fokussierung des Laserstrahls auf ein Werkstück, **dadurch gekennzeichnet, dass** mehrere optische Elemente zur Strahlformung und Fokussierung des Laserstrahls auf ein Werkstück vorgesehen und abwechselnd in den Strahlengang des Laserstrahls bringbar sind, wobei die Brechungseigenschaften der optischen Elemente derart aufeinander abgestimmt sind, dass der Fokuspunkt für verschiedene, vorgegebene Wellenlängen für unterschiedliche optische Elemente unterschiedlich geformt ist, insbesondere in Richtung der Strahlachse unterschiedliche Ausdehnung aufweist.

7. Schneidoptik nach Anspruch 5 oder 6, **dadurch gekennzeichnet, dass** die optischen Elemente mit zumindest einer Düse zur Zuführung eines Prozessgases gekoppelt und als Einheit abwechselnd in den Strahlgang des Laserstrahls bringbar sind.

8. Schneidoptik nach einem der Ansprüche 5 bis 7, **dadurch gekennzeichnet, dass** die Gesamtheit der optischen Elemente oder der Kombinationen mit zumindest einer Düse in Art eines Revolverkopfes kreisförmig angeordnet sind.

9. Laserschneidanlage mit einer Schneidoptik und zumindest einer Laserquelle für Laserlicht mit einer spektralen Breite grösser als 10nm FWHM (= full width at half maximum), die kollimiert, fokussiert oder divergent im Freistrahl vor der Schneidoptik zur Verfügung steht, wobei vorzugsweise die Laserstrahlung mittels Transportfaser zur Schneidoptik transportiert wird und unmittelbar vor der Schneidoptik aus dem Faserende austritt, **gekennzeichnet durch** einen Schneidoptik gemäss einem der Ansprüche 1 bis 8.

10. Laserschneidanlage nach Anspruch 9, **dadurch gekennzeichnet, dass** der Schneidoptik gleichzeitig Laserlicht aus mehreren Laserquellen mit unterschiedlichen Wellenlängen zugeführt wird.
